Europäisches Patentamt

European Patent Office

Office européen des brevets

(19)

(11) Numéro de publication: **0 250 299**
**B1**

(12) **FASCICULE DE BREVET EUROPEEN**

(45) Date de publication du fascicule du brevet: **16.01.91**

(51) Int. Cl.⁵: **C 09 D 5/10**

(21) Numéro de dépôt: **87401313.9**

(22) Date de dépôt: **11.06.87**

(54) **Composition de revêtement anti-corrosion à stabilité améliorée, et substrat revêtu.**

(30) Priorité: **13.06.86 FR 8608559**

(43) Date de publication de la demande:
**23.12.87 Bulletin 87/52**

(45) Mention de la délivrance du brevet:
**16.01.91 Bulletin 91/03**

(84) Etats contractants désignés:
**AT BE CH DE ES FR GB GR IT LI LU NL SE**

(56) Documents cités:
**EP-A-0 017 243**
**US-A-3 318 716**
**US-A-4 356 036**

(73) Titulaire: **DACRAL S.A.**
**164, rue Ambroise Croizat**
**F-93200 Saint Denis (FR)**

(72) Inventeur: **Marguier, Gilbert**
**1, avenue Claude Debussy**
**F-60300 Senlis (FR)**

(74) Mandataire: **Ahner, Francis et al**
**CABINET REGIMBEAU, 26, avenue Kléber**
**F-75116 Paris (FR)**

Courier Press, Leamington Spa, England.

## EP 0 250 299 B1

**Description**

La présente invention concerne une composition de revêtement anti-corrosion d'un substrat métallique utile notamment pour la protection des dispositifs vissés et les substrats métalliques recouverts de ce revêtement.

Dans le domaine de la lutte contre la corrosion, il est connu d'utiliser des compositions à base de particules métalliques, d'acide chromique en solution, d'un glycol polymère et d'un agent mouillant.

Ainsi, les brevets français FR—A—2 008 770, FR—A—2 149 434, et européen EP—A—0 017 243, ainsi que la demande de brevet français FR—A—2 561 668 décrivent ce genre de compositions et leurs perfectionnements.

L'utilisation industrielle des compositions décrites dans ces documents a cependant montré leur haute sensibilité au moussage. En effet, les conditions d'applications de ces compositions entraînent une introduction d'air pendant l'utilisation, ce qui crée une émulsion air-solution, la tension de surface et la viscosité de ces compositions empêchant l'évacuation de l'air.

Un inconvénient majeur de ce type d'émulsion est la rétention d'une certaine quantité de composition dans les filetages des dispositifs vissés traités, ce qui entraîne des défauts dans le revêtement. Il peut en résulter des risques importants de rebus des pièces après traitement.

La Demanderesse a mis en évidence que l'introduction de solvant de la famille de hydrocarbures aliphatiques ou aromatiques lourds, dans ce type de composition résoud le problème du moussage (Il peut s'agir notamment de solvants du type naphta ou white-spirit, provenant de la distillation des pétroles. Les solvants de démoussage seront cités ci-après sous la dénomination de "white-spirit" bien que le white-spirit ne soit qu'un exemple particulier). Néanmoins, le white-spirit n'est d'ordinaire par miscible dans le type de compositions défini ci-dessus, les compositions sont instables et il nuit à la formation du film de composition anti-corrosion au moment du revêtement.

La Demanderesse a résolu ce problème de l'introduction du white-spirit dans les compositions anti-corrosion et mis au point une composition anti-corrosion dans laquelle d'une part le white-spirit est dispersé et d'autre part, les propriétés de mouillage et de formation du film sont préservées.

La présente invention concerne donc une composition de revêtement anti-corrosion d'un substrat métallique comportant:

a) de 10 à 40% en poids d'un métal particulaire, ayant un potentiel d'électrode normal négatif, de valeur absolue supérieure à celle du fer, en particulier du zinc ou un alliage ou un mélange zinc-aluminium,

b) de 1 à 12% en poids d'acides chromique et borique et/ou de leurs dérivés,

c) de 0,5 à 4% en poids d'un régulateur de pH, en particulier ZnO ou $CoCO_3$,

d) de 7 à 30% en poids d'un solvant du type polyol ou éther de glycol, en particulier de dipropylène glycol,

e) de 0,1 à 10% en poids d'un co-solvant organique de paramètre de solubilité 10,8±1, en particulier d'acétate d'éthyl-glycol ou d'acétate d'éther méthylique du propylène glycol,

f) de 0,1 à 10% en poids de white spirit,

g) de 0,1 à 3% d'un agent épaississant, en particulier d'hydroxyéthyl cellulose,

h) de 1 à 3% en poids d'un système de tensio-actifs non ioniques, comportant au moins un tensio-actif hydrosoluble présentant un HLB supérieur à 10, et un tension-actif soluble dans le white spirit présentant un HLB inférieur à 10,

i) éventuellement jusqu'à 10% en poids de lubrifiant solide, en particulier de PTFE, et

j) de l'eau.

L'utilisation du white-spirit dans une composition de revêtement anti-corrosion permet d'améliorer de façon décisive la mise en ouevre des compositions selon l'invention, lors de leur application sur le substrat métallique, comme il apparaîtra dans les exemples, sans remettre en cause les bonnes caractéristiques des revêtements obtenus.

Dans les différentes compositions décrites ci-après, sauf indication contraire, les pourcentages sont pondéraux.

Selon l'invention, on peut utiliser tout métal ou alliage ayant un potentiel d'électrode normal négatif, de valeur absolue supérieure à celle du fer. Il peut s'agir en particulier du zinc, de l'aluminium, du cadmium et de leurs mélanges ou alliages, par exemple avec le nickel, le fer ou le cobalt. Et plus particulièrement, on utilisé selon l'invention du zinc ou de l'aluminium ou leurs alliages, sous forme particulaires ou lamellaires ("flakes").

On peut utiliser également selon l'invention un mélange de particules de zinc et d'aluminium.

La taille des particules métalliques est choisie de préférence de façon classique pour ce genre de composition anti-corrosion.

Selon l'invention, on peut introduire le métal particulaire aussi bien sous forme d'une pâte comportant le métal particulaire et un composant liquide comme du white-spirit, que sous forme de particules sèches. En particulier, on peut utiliser des pâtes comportant de 85% à 92% en poids de métal et de 8% à 15% en poids de white-spirit.

Le white-spirit, qui comme on l'a vu a un effet "anti-bullage", peut donc être indifféremment introduit avec le métal particulaire ou indépendamment. Il entre pour 0,1 à 10% dans la composition, de préférence 0,5 à 6%.

On peut utiliser du white-spirit ordinaire, c'est-à-dire une coupe provenant de la distillation des pétroles, dont le point d'ébullition est compris entre 80° et 200°C, et qui est composée de divers carbones aliphatiques et aromatiques, (à 15% d'aromatique par exemple).

D'autres éléments essentiels selon l'invention sont les acides chromiques et/ou boriques, usuellement utilisés dans ce type de compositions, utiles pour leur effet anti-corrosif, et introduits à raison de 1 à 12% de la composition.

Le solvant à haut point d'ébullition permet, après l'application de la composition et lors du chauffage par sa volatilisation lente, la formation d'un revêtement anti-corrosif uniforme. Il permet, en outre, la transformation du chrome VI en chrome III, et d'autres réactions d'oxydoréduction qui ont lieu lors de la formation du revêtement.

De préférence, la quantité de co-solvant est au moins égale à la quantité de white-spirit, c'est-à-dire comprise au moins entre 0,5% et 10% du poids de la composition, de préférence entre 0,5 et 6%.

A titre d'exemple de co-solvant convenable selon l'invention, bien que d'autres co-solvants soient envisageables, à condition qu'ils soient compatibles avec le solvant du type éther de glycol, le white-spirit et l'acide chromique, on peut utiliser de l'acétate d'éthylglycol ou l'acétate d'éther méthylique du propylène glycol (Dowanol®).

La présence simultanée de l'eau et du white-spirit, nécessite la présence d'un système de tensio-actifs qui permettent d'assurer de bonnes propriétés de mouillage des pièces et de formation du film. Ce système comporte d'une part au moins un tensio-actif hydrosoluble et d'autre part au moins un tensio-actif soluble dans le white-spirit. Il s'agit de préférence de tensio-actifs non ioniques.

Typiquement, les premiers tensio-actifs, solubles dans l'eau, ont une valeur HLB supérieure à 10, de l'ordre de 12,5 par exemple, tandis que les seconds, insolubles dans l'eau mais solubles dans les solvants aromatiques et/ou aliphatiques ont une valeur HLB inférieure à 10, de l'ordre de 8,7 par exemple.

Selon l'invention, le système de tensio-actifs entre pour 1% à 3% en poids de la composition.

Des tensio-actifs convenables selon l'invention peuvent être choisis dans la formule des non-ioniques, par exemple des polyéthoxyéther d'alkylphénol notamment des nonylphénols oxyéthylénés. A titre d'exemple, on peut utiliser des tensio-actifs de la gamme Remcopal® (Gerland), en particulier Remcopal® 334 (soluble dans les solvants) et Remcopal® 349 (soluble dans l'eau).

Enfin, à titre d'élément facultatif, on peut en outre ajouter à la composition d'autres composants, comme des épaississants qui permettent une meilleure mise en oeuvre des compositions et/ou des lubrifiants solides qui améliorent les propriétés mécaniques du revêtement obtenu.

Comme épaississant, on peut utiliser un polymère non-ionique soluble dans l'eau, par exemple l'hydroxyéthylcellulose, bien que d'autres épaississants, cellulosiques notamment, soient envisageables à condition qu'ils soient compatibles avec la présence de l'acide chromique.

Selon l'invention, on peut ajouter 0,1% à 3% en poids d'hydroxyéthylcellulose. Quand d'autres épaississants de poids moléculaire différent sont utilisés, la proportion pondérale indiquée ci-dessus varie.

Comme lubrifiant solide, on peut utiliser, comme dans d'autres compositions anti-corrosion aqueuses, du PTFE ou du $MoS_2$. Selon l'invention, les compositions peuvent comprendre jusqu'à 10% de lubrifiant solide.

L'invention concerne aussi bien les compositions où tous les composants sont mélangés, que les compositions présentées sous forme des différents composants conditionnés séparément, que les compositions sous forme de prémélanges de différents composants. Les différents composants des compositions sont, en général, mélangés avant d'être appliqués au substrat, sous forme d'au moins deux prémélanges dont un en milieu aqueux et un en milieu organique, comme cela apparaîtra dans les exemples.

Les compositions selon l'invention sont utilisées dans les procédés classiques de revêtement de substrats métalliques, notamment des substrats d'acier, de fonte, d'acier fritté.

On effectue le revêtement du substrat par tout procédé adapté, par exemple trempage ou application au pistolet, puis on chauffe le substrat revêtu à une température et pendant un temps appropriés jusqu'au durcissement du revêtement sur le substrat, le chauffage provoquant en particulier l'évaporation des solvants et les réactions chimiques internes permettant de parvenir à la formation du revêtement. Le chauffage peut être en outre précédé d'un égouttage, par centrifugation par exemple lorsqu'il s'agit de pièces de boulonnerie en particulier.

Le revêtement peut être réalisé en plusieurs couches, les étapes d'application et de durcissement sont alors effectuées plusieurs fois, jusqu'à l'obtention de l'épaisseur de revêtement désirée.

Comme dans les procédés de revêtement classiques, les substrats peuvent être prétraités, par exemple, par dégraissage alcalin puis rinçage et microsablage.

De plus, les éléments revêtus peuvent faire l'objet d'autres traitements ultérieurs, comme des laquages, vernissages, applications de peinture.

Les compositions contenant du white-spirit selon l'invention conduisent à une plus grande stabilité du produit, durant l'utilisation, notamment l'utilisation en ligne, grâce à la meilleure maîtrise des propriétés mouillantes dans le temps. De plus, elles présentent une meilleure aptitude à l'utilisation industrielle du fait de la tension superficielle mieux adaptée, du fait de la stabilité de leur densité et de l'absence de moussage.

La constance de la densité dans le temps évite le réglage de la centrifugation. En effet, pour des conditions de centrifugation données, la densité constante permet de déposer toujours la même épaisseur de revêtement.

Enfind, la répartition et l'aspect du revêtement que les compositions selon l'invention permettent d'obtenir sur les substrats à revêtir, en particulier des substrats métalliques comportant des filetages, sont meilleurs en particulier du fait de l'absence de bulles et de surépaisseurs dans les filets ou sur les pièces traitées. De ce fait, les performances mécaniques et la résistance à la corrosion des substrats revêtus sont améliorées, et les pertes par rebus sont réduites.

C'est pourquoi, la présente invention concerne également les substrats métalliques recouverts d'un revêtement anti-corrosion résultant du chauffage d'une composition selon l'invention après son application audit substrat. Il s'agit notamment de vis, boulons, écrous, agrafes, ressorts, ou de pièces d'acier embouti, de fonte ou d'acier fritté, en particulier des éléments de carrosserie d'automobiles et de dispositifs d'électroménager.

D'autres caractéristiques et avantages de la présente invention apparaîtront à la lecture des exemples ci-après set sur la figure annexée.

Exemples 1 à 4
Exemples de composition au white-spirit

|  | Ex. 1 | Ex. 2 | Ex. 3 | Ex. 4 |
|---|---|---|---|---|
| Zinc flakes | 20 | 20 | 30 | 17 |
| Aluminum flakes |  |  |  | 3 |
| Di propylène glycol | 10 | 15 | 20 | 15 |
| Acétate d'éthyl glycol | 5 | 4 | 2 | 4 |
| White spirit | 5 | 3 | 2 | 3 |
| Remcopal® 334 | 1 | 0,7 | 0,5 | 0,7 |
| Remcopal® 349 | 1,6 | 1 | 1,5 | 1 |
| Eau | 51,9 | 50,8 | 35 | 50,8 |
| Acide chromique | 3 | 3 | 4 | 3 |
| Oxyde de zinc | 1 | 1 | 2 | 1 |
| Acide borique | 1 | 1 | 2 | 1 |
| HEC | 0,5 | 0,5 | 1 | 0,5 |
|  | 100 | 100 | 100 | 100 |

Le white spirit comporte 15% d'aromatique, distillé entre 150 et 195°C et a un point éclair de 35°C.

# EP 0 250 299 B1

Exemple 5
Test de moussage-démoussage

Les mesures de densité suivantes permettent de rendre compte de l'influence de la présence de white-spirit sur le démoussage dans un bain de composition anti-corrosion.

|   | densité au départ 0 h | 0 h 1 min | 2 h | 3 h | 4 h | 6 h | 8 h |
|---|---|---|---|---|---|---|---|
| A | 1,35 | 1,26 | 1,28 | 1,29 | 1,29 | 1,30 | 1,31 |
| B | 1,35 | 1,28 | 1,32 | 1,33 | 1,33 | 1,34 | 1,35 |
| C | 1,35 | 1,29 | 1,33 | 1,34 | 1,35 | 1,35 | 1,35 |
| D | 1,35 | 1,29 | 1,34 | 1,35 | 1,35 | 1,35 | 1,35 |

A—Composition de référence sans white-spirit sans démousssge mécanique;
B—Composition de référence sans white-spirit; démoussage mécanique;
C—Composition avec zinc en pâte, white-spirit 2%;
D—Composition avec zinc en poudre, white spirit 2%.

Le moussage est provoqué par une agitation volantaire au batteur pendant une minute. La présence de white-spirit influe considérablement sur le démoussage.

Exemple 6
Test de stabilité de la densité

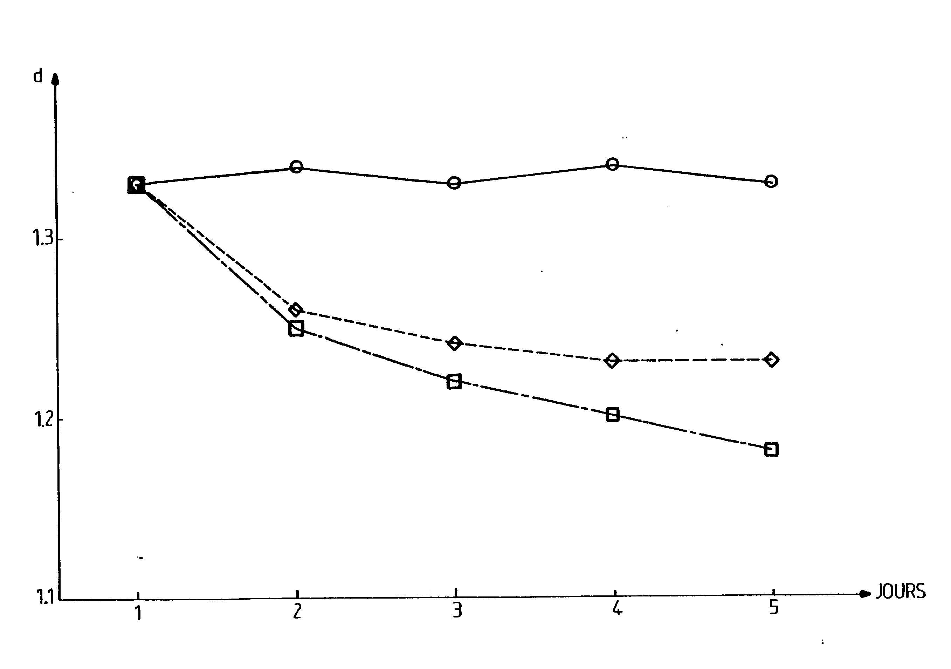

La figure 1 représente au cours du temps (en jours) les mesures de la densité d de compositions anti-corrosion, à extrait sec constant.

La composition comportant du white-spirit (O) garde une densité pratiquement constante pendant quatre jours. Les deux autres compositions ($\square$, $\diamond$ Dacromet® standard), dont les résultats sont donnés à titre comparatif, voient leur densité chuter au cours de la même période.

**Revendications**

1. Composition de revêtement anti-corrosion d'un substrat métallique, caractérisée en ce qu'elle comporte:

a) de 10 à 40% en poids d'un métal paticulaire, ayant un potentiel d'électrode normal negatif, de jaleur absolue supérieure à celle du fer, en particulier du zinc ou de l'aluminium ou leurs alliages, ou un mélange zinc-aluminium,

b) de 1 à 12% en poids d'acides chromique et borique et/ou de leurs dérivés,

c) de 0,5 à 4% en poids d'un régulateur de pH, en particulier ZnO ou $CoCO_3$,

d) de 7 à 30% en poids d'un solvant du type polyol ou éther du glycol, en particulier de dipropylène glycol,

e) de 0,1 à 10% en poids d'un co-solvant organique de paramètre de solubilité 10,8±1, en particulier d'acétate d'éthyl-glycol ou d'acétate d'éther méthylique du propylène glycol,

f) de 0,1 à 10% en poids de white spirit,

g) de 0,1 à 3% d'un agent épaississant, en particulier d'hydroxyéthyl cellulose,

h) de 1 à 3% en poids d'un système de tensio-actifs non ioniques, comportant au moins un tensio-actif hydrosoluble présentant un HLB supérieur à 10, et un tensio-actif soluble dans le white spirit présentant un HLB inférieur à 10,

i) éventuellement jusqu'à 10% en poids de lubrifiant solide, en particulier de PTFE, et

j) de l'eau.

2. Composition selon la revendication 1, caractérisée en ce que les tensio-actifs non ioniques sont du type polyéthoxyéther d'alkylphénol.

3. Composition selon l'une des revendications 1 et 2, caractérisée en ce que le métal particulaire est introduit dans la composition sous forme d'une pâte comportant ledit métal sous forme de particules, et du white spirit.

4. Composition selon la revendication 3, caractérisée en ce que la pâte comporte de 85 à 92% en poids de métal particulaire et de 8 à 15% en poids de white spirit.

5. Composition selon l'une des revendications 1 et 2, caractérisée en ce que le métal est introduit dans la composition sous forme de particules sèches.

6. Substrat métallique notamment vis, boulon, écrou, agraphe, ressort ou pièces d'acier embouti, de fonte ou acier fritté comme des éléments de carrosserie d'automobile ou de dispositifs d'électroménager

5

recouvert d'un revêtement anti-corrosion résultant du chauffage d'une composition selon l'une des revendications 1 à 5, après application de ladite composition sur ledit substrat.

**Patentansprüche**

1. Zusammensetzung für einen Antikorrosionsüberzug eines Metallsubstrats, gekennzeichnet durch den Gehalt von

a) 10—40 Gew.% eines teilchenförmigen Metalles, das eine negative Spannung an der Normalelektrode mit einem Absolutwert aufweist, der oberhalb demjenigen des Eisens liegt, im besonderen Zink oder Aluminium oder deren Legierungen oder eine Mischung aus Zink und Aluminium,

b) 1—12 Gew.% Chrom- und Borsäure und/oder Derivate davon,

c) 0,05—4 Gew.% eines pH-Regulators, im besonderen ZnO oder CoCO₃,

d) 7—30 Gew.% eines Lösungsmittels vom Typ des Polyols oder Glycoläthers, im besonderen Dipropylenglycol,

e) 0,1—10 Gew.% eines organischen Co-Lösungsmittels mit einem Lösungsparameter von 10,8±1, im besonderen Äthyl-Glycol-Acetat oder dem Acetat von Propylen-Glycol-Methläther,

f) 0,1—10 Gew.% White Spirit,

g) 0,1—3 Gew.% eines Verdickungsmittels, im besonderen Hydroxyäthyl-Zellulose,

h) 1—3 Gew.% eines nichtionischen Tensidsystemes, enthaltend wenigstens ein wasserlösliches Tensid mit einem HLB größer als 10 und ein Tensid das in White Spirit löslich ist und einen HLB unterhalb 10 aufweist.

i) gegebenenfalls bis zu 10 Gew.% eines festen Schmiermittels, im besonderen PTFE und

j) Wasser.

2. Zusammensetzung nach Anspruch 1, dadurch gekennzeichnet, daß sie nichtionische Tenside vom Typ des Polyäthoxyäthers des Alkylphenols enthält.

3. Zusammensetzung nach einem der Ansprüche 1 und 2, dadurch gekennzeichnet, daß das teilchenförmige Metall in die Zusammensetzung als eine Paste eingeführt wird, die das Metall in Teilchenform und den White Spirit enthält.

4. Zusammensetzung nach Anspruch 3, dadurch gekennzeichnet, daß die Paste 85—92 Gew.% des teilchenförmigen Metalles und 8—15 Gew.% White Spirit enthält.

5. Zusammensetzung nach einem der Ansprüche 1 und 2, dadurch gekennzeichnet, daß das Metall in die Zusammensetzung in Form trockener Teilchen eingeführt wird.

6. Metallsubstrat, insbesondere Schrauben, Bolzen, Muttern, Klammern, Federn oder getriebene oder gezogene Stahlstücke, Gußeisen oder Sinterstahl, wie Elemente von Autmobilkarosserien oder von Haushaltsgeräten, das mit einem Antikorrosionsüberzug versehen ist, der erhältlich ist durch Erwärmung einer Zusammensetzung gemäß den Ansprüchen 1—5 nach Applikation dieser Zusammensetzung auf dem Substrat.

**Claims**

1. Anti-corrosion coating composition for a metal substrate, characterized in that it comprises:

a) from 10 to 40% by weight of a particulate metal having a standard negative electrode potential of absolute value above that of iron, in particular zinc or aluminium or their alloys, or a mixture of zinc and aluminium,

b) from 1 to 12% by weight of chromic and boric acids and/or their derivatives,

c) from 0.5 to 4% by weight of a pH regulator, in particular ZnO or CoCO₃,

d) from 7 to 30% by weight of a solvent of the polyol or glycol ether type, in particular glycol dipropylene,

e) from 0.1 to 10% by weight of an organic co-solvent having a solubility parameter of 10.8±1, in particular ethyl-glycol acetate or glycol propylene methyl ether acetate,

f) from 0.1 to 10% by weight of white spirit,

g) from 0.1 to 3% of a thickening agent, in particular cellulose hydroxyethyl,

h) from 1 to 3% by weight of a non-ionic surfactant system having at least one water-soluble surfactant having an HLB greater than 10 and a surfactant soluble in white spirit and having an HLB less than 10,

i) where appropriate up to 10% by weight of solid lubricant, in particular PTFE, and

j) water.

2. Composition according to Claim 1, characterized in that the non-ionic surfactants are of the alkylphenol polyethoxyether type.

3. Composition according to either of Claims 1 and 2, characterized in that the particulate metal is introduced into the composition in the form of a paste comprising the said metal, in particle form, and white spirit.

4. Composition according to Claim 3, characterized in that the paste comprises from 85 to 92% by weight of particulate metal and from 8 to 15% by weight of white spirit.

5. Composition according to either of Claims 1 and 2, characterized in that the metal is introduced into the composition in the form of dry particles.

6. Metal substrate, in particular a screw, bolt, nut, clip, spring or pieces of stamped or cast steel or sintered steel such as car body parts or electrical household appliances, covered with an anti-corrosion coating resulting from heating a composition according to one of Claims 1 to 5, after applying the said composition to the said substrate.

EP 0 250 299 B1

JOURS

1